# EUROPÄISCHE PATENTSCHRIFT

(11) **EP 3 118 591 B1**
(45) Veröffentlichungstag und Bekanntmachung des Hinweises auf die Patenterteilung: **12.09.2018**
(21) Anmeldenummer: 15176941.1
(22) Anmeldetag: 15.07.2015
(51) Int. Cl.: G01F 23/26, G01F 23/28

(54) **FÜLLSTANDMESSGERÄT**
FILL LEVEL MEASUREMENT DEVICE
APPAREIL DE MESURE DE NIVEAU DE REMPLISSAGE

(43) Veröffentlichungstag der Anmeldung: 18.01.2017
(73) Patentinhaber: VEGA Grieshaber KG, 77709 Wolfach (DE)
(72) Erfinder: Grießbaum, Karl, 77796 Mühlenbach (DE)
(74) Vertreter: Westphal, Mussgnug & Partner Patentanwälte mbB

(56) Entgegenhaltungen:
- EP-A1- 0 916 930
- DE-A1- 3 044 353
- DE-A1-102009 060 742
- US-A- 3 140 608
- US-A1- 2009 151 446

## Beschreibung

Die vorliegende Erfindung betrifft ein Füllstandmessgerät gemäß dem Oberbegriff des Patentanspruchs 1.

Füllstandmessgeräte und Verfahren zur Bestimmung des Füllstands eines Füll- oder Schüttgutes in einem Behälter sind aus dem Stand der Technik bekannt und werden beispielsweise eingesetzt um zu erfassen, ob sich ein Füllstand oberhalb oder unterhalb eines vordefinierten Befüllungszustands befindet. Solche Geräte werden oft auch als Füllstandgrenzschalter bezeichnet.

Füllstandmessgeräte sind zum Beispiel aus DE 30 44 353 A1, US 2009/151446 A1, DE 10 2009 060 742 A1, und US 3,140,608 bekannt.

Füllstandgrenzschalter können auf ganz unterschiedlichen physikalischen Prinzipien beruhen. Eines dieser Prinzipien ist die Auswertung einer Kapazität, welche sich zwischen einer Messelektrode und einer Referenzelektrode bildet, wobei das Füllgut bei Befüllung des Behälters einen Raum zwischen Referenz- und Messelektrode ausfüllt und dabei die durch diese gebildete Kapazität verändert. Zur Messung der füllstandabhängigen Kapazität gibt es wiederum mehrere unterschiedliche Verfahren. Ein Verfahren zur Bestimmung der Kapazität ist die Bildung eines elektrischen Resonanzkreises unter Einbeziehung der interessierenden Kapazität. Die Resonanzfrequenz des Resonanzkreises kennzeichnet dabei die Größe der zu messenden Kapazität.

Der Resonanzkreis kann beispielsweise als Serienschwingkreis mit Serienschaltung einer Induktivität mit einer Kapazität ausgeführt sein.

Ein anderes Prinzip für einen Füllstandgrenzschalter besteht in der Nutzung einer Leitungsresonanz. Eine als längliche Sonde ausgeführte Leitung erzeugt Reflexionen einer eingespeisten elektrischen Wechselspannung, woraus sich eine stehende Spannungswelle auf der Sonde bildet. Am Spannungs-Einspeisepunkt zeigt die dort messbare Spannung auf Grund der stehenden Welle ein resonantes Verhalten, wobei die Leitungslänge die Resonanzstellen bestimmt. Bei Kontakt der Leitungs-Sonde mit Füllgut ergeben sich durch Kapazitäten und /oder zusätzliche Reflexionen bedingt durch das Füllgut Veränderungen in der Frequenzlage der Resonanzstellen. Diese sind hinsichtlich einer Grenzstandmeldung auswertbar.

Die Anregung eines elektrischen Resonanzkreises bedingt die Einspeisung eines Wechselspannungssignals über einen Wechselspannungsgenerator. Durch Veränderung der Frequenz des eingespeisten Signals lässt sich die Resonanzfrequenz auffinden. Sie ist gekennzeichnet entweder durch eine Spannungsüberhöhung oder ein Spannungsminimum. Die Detektion der Wechselspannungsamplitude über der Frequenz erlaubt so die Bestimmung der Resonanzstelle (n) .

Einige Anwendungen dieser Prinzipien der Grenzstanddetektion von Füllgütern erfordern beispielsweise einen Einbau des Sensors von oben durch eine vorhandene Öffnung im Behälterdeckel. Soll gleichzeitig aber der Schaltpunkt des Grenzschalters nicht im oberen Bereich des Behälters, also in der Nähe der Behälterdecke, sondern weiter unten liegen, so muss die detektierende Elektrode oder Sonde über eine Verlängerung auf die gewünschte Behälterhöhe gebracht werden. Es ist dabei von Vorteil, wenn die Sensorelektronik außerhalb des Behälters, in diesem Fall also oberhalb des Behälterdeckels, angebracht werden kann. Dies hat zur Folge, dass die Sonde über eine Verlängerung von der Elektronik abgesetzt werden muss. Diese Absetzbarkeit ist ebenso erforderlich bei Anwendungen mit sehr hohen Temperaturen im Behälter, damit die Elektronik weiter entfernt von der Sonde und den dort herrschenden Temperaturen problemlos betrieben werden kann.

Damit ergibt sich die Anforderung, dass eine Leitung zwischen der Elektronik mit dem Wechselspannungsgenerator und dem Wechselspannungsdetektor einerseits und der Grenzstand detektierenden Sonde mit dem elektrischen Resonanzkreis andererseits nötig ist, die diese beiden Komponenten verbindet. Die so eingefügte elektrische Leitung hat die Ausbildung von Leitungsresonanzen auf der Verbindungsleitung zur Folge. Diese Leitungsresonanzen entstehen zusätzlich zu den vom Messprinzip her gewollten und für die Funktion wichtigen Resonanzen der Sonde und können sich diesen störend überlagern. Besonders störend wirken Leitungsresonanzen dann, wenn sie im gleichen Frequenzbereich wie die Sondenresonanzen liegen.

Im Stand der Technik wird daher darauf geachtet, dass die Leitungslänge der Verlängerungsleitung so kurz ist, dass deren niedrigste Resonanzfrequenz, also beispielsweise die A/4-Leitungsresonanz, noch deutlich über der Sondenresonanzfrequenz liegt.

Im Hinblick auf Funktionssicherheit des Messprinzips auch bei Medienanhaftungen an der Sonde ist es vorteilhaft, möglichst hohe Resonanzfrequenzen der Sonde im Bereich von über 100 MHz zu wählen.

Es ergibt sich damit ein Konflikt zwischen der Wahl der Sonden-Resonanzfrequenz und der möglichen Leitungslänge einer gewünschten Verlängerung zwischen Sonde und Elektronik. Bei bestehenden Geräten führt dies beispielsweise dazu, dass nur kurze Verlängerungen unter 50 cm angeboten werden können. Hier setzt die vorliegende Erfindung an.

Es ist eine Aufgabe der Erfindung, ein Füllstandmessgerät, insbesondere einen Füllstandgrenzschalter, gemäß dem Stand der Technik zur Verfügung zu stellen, der eine räumliche Anordnung von Sonde und Elektronik mit einer möglichst großen Distanz erlaubt.

Diese Aufgabe wird durch ein Füllstandmessgerät gemäß Patentanspruch 1 gelöst.

Vorteilhafte Weiterbildungen sind Gegenstand abhängiger Patentansprüche.

Ein erfindungsgemäßes Füllstandmessgerät weist eine Elektronik mit einem Signalgenerator zur Erzeugung einer Wechselspannungund einem Signaldetektor zur Erfassung einer an einer resonanten Messsonde mit einem Eingang reflektierten Wechselspannung sowie ein Verbindungselement auf, das die Elektronik elektrisch und mechanisch mit der Resonanz-Messsonde verbindet, und zeichnet sich dadurch aus, dass das Verbindungselement eine erste Verbindungsleitung, die den Signalgenerator mit dem Eingang der Messsonde verbindet, und eine zweite Verbindungsleitung, die den Eingang der Messsonde mit dem Signaldetektor verbindet, aufweist.

Auf diese Weise wird verhindert, dass am Eingang des Wechselspannungsdetektors Überlagerungen der von dem Wechselspannungsgenerator ausgesendeten und der von der Sonde reflektierten Wechselspannung anliegen und so eine Detektion einer von der Messsonde erzeugten Resonanz erschwert oder verhindert wird.

Die erste Verbindungsleitung verbindet den Wechselspannungsgenerator mit der Sonde und die zweite Verbindungsleitung die Sonde mit dem Wechselspannungsdetektor. Die Verbindungsleitungen und der Wechselspannungsgenerator bzw. der Wechselspannungsdetektor sind dabei vorteilhafterweise in Ihrer Impedanz möglichst gut aneinander angepasst. Insbesondere sind vorteilhafterweise eine Leitungsimpedanz der erste Verbindungsleitung und eine Eingangsimpedanz des Ausgangs des Wechselspannungsgenerators sowie eine Leitungsimpedanz der zweiten Verbindungsleitung und eine Eingangsimpedanz des Eingangs des Wechselspannungsdetektors aneinander angepasst. Auf diese Weise lässt sich zwar nicht grundsätzlich die Entstehung von Leitungsresonanzen auf der ersten Verbindungsleitung verhindern, aber der Wechselspannungsdetektor, der über die zweite Verbindungsleitung mit der Messsonde verbunden ist, detektiert diese nicht mehr.

Idealer Weise sind die erste Verbindungsleitung und die Eingangsimpedanz des Signalgeneratorausgangs derart aneinander angepasst, dass ein Reflexionsfaktor für eine an den Ausgang des Signalgenerators zurücklaufende Wechselspannung minimiert wird, insbesondere null ist.

Auf diese Weise werden Mehrfachreflexionen des von der Messsonde reflektierten und zum Wechselspannungsgenerator zurücklaufenden Wechselspannungssignals verhindert, sodass bereits auf diese Weise eine weitere Verbesserung des Messergebnisses erzielt werden kann.

Ferner ist es vorteilhaft, wenn die zweite Verbindungsleitung und die Eingangsimpedanz des Signaldetektoreingangs derart aneinander angepasst sind, dass ein Reflexionsfaktor am Eingang des Signaldetektors minimiert wird, insbesondere null ist.

Auf diese Weise wird verhindert, dass das von der Messsonde reflektierte und über die zweite Verbindungsleitung zu dem Wechselspannungsdetektor geleitete Wechselspannungssignal am Eingang des Wechselspannungsdetektors erneut reflektiert wird. Auf diese Weise werden Signalüberlagerungen und auch Mehrfachreflexionen auf der zweiten Verbindungsleitung verhindert.

Die Erfindung wird nachfolgend anhand von Ausführungsbeispielen unter Bezugnahme auf die beigefügten Figuren detailliert erläutert. Es zeigen:
Figur 1 ein Anwendungsbeispiel für einen Füllstandgrenzschalter
Figur 2 ein Blockschaltbild eines Füllstandgrenzschalters mit Auswertung des Resonanzverhaltens einer Sonde,
Figur 3 ein Blockschaltbild eines Füllstandgrenzschalters gemäß Figur 2 mit abgesetzter Sonde entsprechend dem Stand der Technik,
Figur 4 beispielhafte Resonanzkurven der Füllstandgrenzschalter aus Figur 2 und Figur 3,
Figur 5 ein Blockschaltbild eines Füllstandgrenzschalters gemäß Figur 2 mit abgesetzter Sonde.

Die Zeichnungen sind lediglich schematisch und nicht maßstabsgetreu. Gleiche Bezugszeichen beschreiben gleiche oder ähnliche Teile.

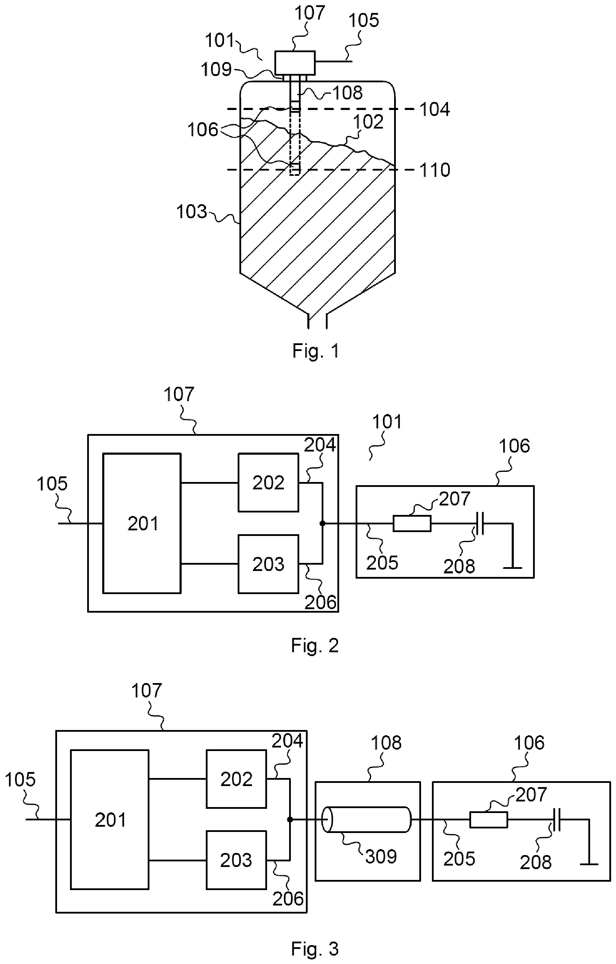

In Figur 1 ist ein Anwendungsbeispiel für ein Füllstandmessgerät 101 als Füllstandgrenzschalter bzw. Grenzstandsensor gezeigt, wobei der Füllstandgrenzschalter oberhalb einer Füllgutoberfläche 102 angeordnet ist. Das Füllgut befindet sich in einem Behälter 103. Übersteigt die Füllgutoberfläche 102 im Bereich des Messgeräts 101 ein bestimmtes Niveau 104, den sogenannten Grenzstand, soll das Gerät das Überschreiten dieses Grenzstands 104 signalisieren. Dazu ist das Gerät 101 über eine oder mehrere Leitungen 105 mit einer hier nicht dargestellten Anzeige- und/ oder Steuereinheit verbunden, die auf das Ausgabesignal des Grenzstandsensors 101 anspricht. Über die Leitung(en) 105 kann der Grenzstandsensor 101 auch mit elektrischer Energie versorgt werden. Alternativ kann im oder beim Messgerät eine Energiequelle und / oder ein Energiespeicher, beispielsweise in Form einer Batterie oder eines Akkus, vorhanden sein. Die Leitungen 105 könnten in diesem Fall ganz entfallen, wenn der Sensor 101 seine Information drahtlos zu einer geeigneten Gegenstelle übermittelt.

Der Füllstandgrenzschalter 101 besteht üblicherweise aus einem Messfühler, für den hier synonym auch der Begriff Sonde 106 verwendet wird, und einer Steuerungs- und Auswertelektronik 107. Die Sonde 106 befindet sich innerhalb des Behälters 103, so dass sie mit dem Füllgut in Kontakt kommen kann. Sie weist beispielsweise eine stabähnliche Form auf, deren vertikale Ausdehnung je nach Ausführung im Bereich zwischen einigen Millimetern und einigen Zentimetern liegt. Daran schließt sich ein ebenfalls stabförmiges Verbindungsteil 108 an, das der elektrischen und mechanischen Verbindung der Sonde 106 mit der Steuerungs- und Auswertelektronik 107 dient.

Die Steuerungs- und Auswertelektronik 107 dagegen ist vorteilhafterweise außerhalb des Behälters 103 und innerhalb eines hier nicht weiter dargestellten schützenden Umgehäuses angebracht. Zwischen Steuerungs- und Auswertelektronik 107 und Sonde 106 befindet sich eine Prozessadaption 109, die die beiden Teile miteinander verbindet und die geeignete Montageverbindung mit einer Behälterdecke herstellt.

Soll der Grenzstand 104 auf einem alternativen Behälterniveau 110 detektiert werden, so ist die Positionierung der Sonde 106 entsprechend zu modifizieren. Dies ist in Figur 1 gestrichelt dargestellt. Die sensitive Sonde 106 befindet sich demnach weiter unten im Behälter 103, wodurch sich eine größere Distanz zwischen der Sonde 106 und der Steuerungs- und Auswertelektronik 107 ergibt, die vom Verbindungsteil 108 zu überbrücken ist.

Figur 2 zeigt in einem elektrischen Blockschaltbild die Steuerungs- und Auswertelektronik 107 sowie die Sonde 106. Die Steuerungs- und Auswertelektronik 107 besteht aus einer Steuerungs- und Auswerteeinheit 201, die einzelne Messvorgänge initiiert und auswertet sowie das Messergebnis nach außen kommuniziert sowie einem Wechselspannungsgenerator 202 und einem Wechselspannungsdetektor 203, die beide mit der Steuerungs- und Auswerteeinheit 201 verbundenen sind.

Zur Durchführung eines einzelnen Messvorgangs steuert die Steuerungs- und Auswerteeinheit 201 den Wechselspannungsgenerator 202 an, so dass dieser an einem Ausgang 204 ein Wechselspannungssignal bereitstellt. Das Wechselspannungssignal muss zur Bestimmung einer Resonanzstelle in seiner Frequenz verändert werden. Der Ausgang 204 ist mit einem Eingang 205 der Sonde 106 verbunden. Ebenfalls mit dem Eingang 205 ist ein Eingang 206 des Wechselspannungsdetektors 203 verbunden. Der Wechselspannungsdetektor 203 erfasst die frequenzabhängige Wechselspannungsamplitude der am Verbindungsknoten der Ein-/Ausgänge 204, 205 und 206 anliegenden Wechselspannung und liefert diese an die Steuerungs- und Auswerteeinheit 201 zurück. Innerhalb der Steuerungs- und Auswerteeinheit 201 wird der Zusammenhang zwischen Wechselspanungsfrequenz und zugehöriger detektierter Amplitude aufbereitet und hinsichtlich der Resonanzstellen ausgewertet. Die Resonanzstelle wird bestimmt durch die Ausgestaltung der Sonde 106. Im dargestellten Ausführungsbeispiel ist die Sonde durch einen Serienschwingkreis, bestehend aus einer Induktivität 207 und einer schematisch angedeuteten Kapazität 208 ausgebildet. Die Kapazität 208 ergibt sich durch eine hier nicht näher dargestellte Elektrode innerhalb der Sonde 106, die mit der Umgebung einen Kondensator bildet. Eine Frequenz- und / oder Amplitudenverschiebung der Resonanzstelle deutet auf eine Kapazitätsbeeinflussung durch das Füllgut und damit eine Überschreitung des Grenzstands 104 hin. Alternativ zu einem Schwingkreis kann auch die Resonanz einer Sondenleitung zur Bestimmung des Grenzstands 104 genutzt werden.

Figur 3 entspricht weitgehend dem Blockschaltbild aus Figur 2 mit dem Unterschied, dass der Sondeneingang 205 vom Verbindungknoten zwischen den Ein-/Ausgängen 204 , 205 von Wechselspannungsgenerator 202 und Wechselspannungsdetektor 203 weiter entfernt ist. Das Verbindungsteil 108 verbindet die Teile und enthält eine elektrische Leitung 309. Die elektrische Leitung 309 kann beispielsweise als eine Koaxialleitung, eine Zweidrahtleitung, eine Eindrahtleitung oder eine Microstripleitung ausgebildet sein. Eine Leitungslänge richtet sich wie bereits beschrieben nach der zu überbrückenden Distanz zwischen der Sonde 106 und der Steuerungs- und Auswertelektronik 107.

Figur 3 zeigt eine Ausgestaltung, wie diese im Stand der Technik bislang üblich ist. Diese Lösung, bei der lediglich eine elektrische Leitung 309 zwischen der Sonde 106 und dem Verbindungsknoten der Ein-/Ausgänge 204, 206 vorgesehen ist, hat den Nachteil, dass innerhalb der elektrischen Leitung 309 zusätzliche Resonanzen auftreten, die von der Leitungslänge abhängig sind. Diese zusätzlichen Resonanzen können eine von der Sonde 106 her rührende Resonanz zur Detektion des Grenzstandes 104 derart überlagern, dass eine Messung nicht oder nur sehr unzuverlässig möglich ist.

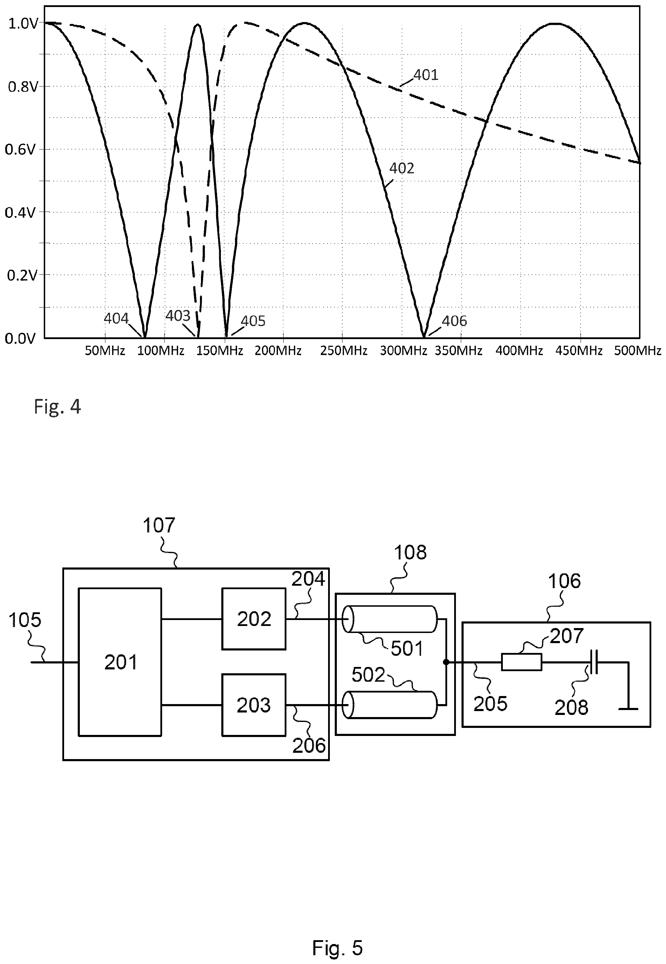

Figur 4 zeigt ein Frequenz-Spannungs-Diagramm mit Messkurven, wie sie bei einer Ausgestaltung gemäß Figur 2 und Figur 3 auftreten können. Die gestrichelte Kurve 401 ergibt sich bei idealen Verhältnissen einer Anordnung gemäß Figur 2 ohne die elektrische Leitung 309. Die durchgezogene Kurve 402 dagegen zeigt die detektierte Wechselspannungsamplitude einer Anordnung gemäß Figur 3 mit einer beispielhaften Länge der elektrischen Leitung 309 von 60cm. Aus der zuvor einen Serienresonanz 403 der Resonanz-Messsonde 106 werden hier mehrere Resonanzstellen 404, 405, 406. Dies erschwert die Auswertung der Resonanz und damit die Bestimmung, ob der Grenzstand 104 überschritten wurde, erheblich.

Figur 5 zeigt ein Blockschaltbild einer erfindungsgemäßen Ausgestaltung eines Grenzstandschalters 101. Der Verbindungsteil 108 enthält nun statt einer Leitung eine erste Leitung 501 und eine zweite Leitung 502. Die erste Leitung 501 verbindet den Ausgang 204 des Wechselspannungsgenerators 202 mit dem Eingang 205 der Sonde 106, während die zweite Leitung 502 den Eingang 205 der Sonde 106 mit dem Eingang 206 des Wechselspannungsdetektors 203 verbindet. Eine Wechselspannung, die vom Ausgang 204 kommend durch die erste Leitung 501 läuft, wird je nach Frequenz mehr oder weniger vom Eingang 205 der Sonde 106 reflektiert. Die Impedanz des Eingangs 205 der Sonde 106 ändert sich im Bereich der Resonanz beträchtlich, wodurch eine Impedanzanpassung zwischen der ersten Leitung 501 und dem Eingang 205 der Sonde 106 prinzipiell unmöglich ist.

Die reflektierte Wechselspannung läuft zum einen die erste Leitung 501 wieder zurück und bildet dadurch am Ausgang 204 des Wechselspannungsgenerators 202 durch Überlagerung von vor- und rücklaufender Spannung nach wie vor zusätzliche Resonanzstellen. Zum anderen läuft die am Eingang 205 der Sonde 106 reflektierte Wechselspannung über die zweite Leitung 502 zum Eingang 206 des Wechselspannungsdetektors 203. Hier kann es nicht zu Überlagerungen mit anderen Spannungen kommen, weshalb die dort zu beobachtende Spannung nur das Resonanzverhalten der Sonde 106 wiedergibt. Voraussetzung ist allerdings dass die in den Eingang 206 des Wechselspannungsdetektors 203 einlaufende Wechselspannung dort nicht reflektiert wird. Dies erreicht man durch eine Impedanzanpassung des Eingangs 206 des Wechselspannungsdetektors 203 an eine Leitungsimpedanz der zweiten Leitung 502. Eine solche Impedanzanpassung kann beispielsweise durch entsprechende Stichleitungen oder AnpassNetzwerke von Bauelementen in L-, T- oder Pi-Struktur erfolgen.

Eine Impedanzanpassung ist außerdem am Ausgang 204 des Wechselspannungsgenerators 202 notwendig. Dazu ist eine Eingangsimpedanz des Wechselspannungsgenerators 202 am Ausgang 204 an eine Leitungsimpedanz der ersten Leitung 501 anzupassen. Die Impedanzanpassung zwischen der ersten und zweiten Leitung 501, 502 an den Wechselspannungsgenerator 202 bzw. den Wechselspannungsdetektor 203 an ihrem der Steuerungs- und Auswertelektronik 107 zugewandten Ende sorgt dafür, dass die Wechselspannungen nicht mehrfach reflektiert werden und so zusätzliche Resonanzen durch Überlagerung der reflektierten Wechselspannung verhindert werden.

### Bezugszeichenliste

- 101: Füllstandmessgerät
- 102: Füllgutoberfläche
- 103: Behälter
- 104: Niveau, erstes
- 105: Leitung
- 106: Sonde, Messsonde, Messfühler
- 107: Auswerteelement, Steuerungs- und Auswerteelektronik
- 108: Verbindungsteil, Verbindungselement
- 109: Prozessadaption
- 110: Niveau, zweites
- 201: Steuerungs- und Auswerteeinheit
- 202: Wechselspannungsgenerator, Signalgenerator
- 203: Wechselspannungsdetektor, Signaldetektor
- 204: Generatorausgang
- 205: Sondeneingang
- 206: Detektoreingang
- 207: Induktivität
- 208: Kapazität

- 309: Verbindungsleitung

- 401: Kurve, erste
- 402: Kurve, zweite
- 403: Resonanzstelle, Serienresonanz der Messsonde
- 404: Resonanzstelle
- 405: Resonanzstelle
- 406: Resonanzstelle

- 501: erste Verbindungsleitung
- 502: zweite Verbindungsleitung
- λ: Wellenlänge

## Patentansprüche

1. Füllstandmessgerät (101) mit einer Steuerungs- und Auswerteelektronik (107) mit einem Signalgenerator (202) zur Erzeugung einer Wechselspannung, einem Signaldetektor (203) zur Erfassung einer an einem Eingang (205) einer resonanten Messsonde (106) reflektierten Wechselspannung, der resonanten Messsonde (106) mit dem Eingang (205), und einem Verbindungselement (108), das die Steuerungs- und Auswerteelektronik (107) elektrisch und mechanisch mit der Messsonde (106) verbindet,
**dadurch gekennzeichnet, dass** das Verbindungselement (108) eine erste Verbindungsleitung (501), die den Signalgenerator (202) mit dem Eingang (205) der Messsonde (106) verbindet, und eine zweite Verbindungsleitung (502), die den Eingang (205) der Messsonde (106) mit dem Signaldetektor (203) verbindet, aufweist.

2. Füllstandmessgerät (101) gemäß Anspruch 1,
**dadurch gekennzeichnet, dass** eine erste Impedanz der ersten Verbindungsleitung (501) und eine Eingangsimpedanz des Ausgangs (204) des Signalgenerators (202) aneinander angepasst sind und/oder eine zweite Impedanz der zweiten Verbindungsleitung (502) und eine Eingangsimpedanz des Eingangs (206) des Signaldetektors (203) aneinander angepasst sind.

3. Füllstandmessgerät (101) gemäß Anspruch 2,
**dadurch gekennzeichnet, dass** die erste Verbindungsleitung (501) und die Eingangsimpedanz des Signalgenerators (202) derart aneinander angepasst sind, dass ein Reflexionsfaktor am Eingang des Signalgenerators (202) minimiert wird, insbesondere null ist.

4. Füllstandmessgerät (101) gemäß Anspruch 2 oder 3,
**dadurch gekennzeichnet, dass** die zweite Verbindungsleitung (502) und die Eingangsimpedanz des Signaldetektors (203) derart aneinander angepasst sind, dass ein Reflexionsfaktor am Eingang des Signaldetektors (203) minimiert wird, insbesondere null ist.

5. Füllstandmessgerät (101) gemäß einem der Ansprüche 3 oder 4,
**dadurch gekennzeichnet, dass** die Anpassung durch Auswahl geeigneter, insbesondere standardisierter, Verbindungsleitungen (501, 502) mit einer vorbestimmten Leitungsimpedanz von insbesondere 50 Ohm oder 75 Ohm, sowie durch Anpassung der Eingangsimpedanz von Signalgenerator (202) und Signaldetektor (203) durch Impedanz-Anpassnetzwerke, insbesondere in L-, T- oder Pi-Struktur, oder Leitungselementen, insbesondere durch Stichleitungen, erfolgt.

6. Füllstandmessgerät (101) nach einem der vorhergehenden Ansprüche,
**dadurch gekennzeichnet, dass** die erste Verbindungsleitung (501) und/oder die zweite Verbindungsleitung (502) als Koaxialleitung, Zweidrahtleitung oder Streifenleitung, insbesondere als Mikrostreifenleitung, ausgebildet sind.

7. Füllstandmessgerät (101) gemäß einem der vorhergehenden Ansprüche,
**dadurch gekennzeichnet, dass** das Füllstandmessgerät (101) als Füllstandgrenzschalter ausgebildet ist.

8. Füllstandmessgerät (101) gemäß einem der vorhergehenden Ansprüche,
**dadurch gekennzeichnet, dass** eine Länge der Verbindungsleitungen (501, 502) wenigstens 50 cm, bevorzugt wenigstens 80 cm, weiter bevorzugt wenigstens 120 cm beträgt.

9. Füllstandmessgerät (101) gemäß einem der vorhergehenden Ansprüche,
**dadurch gekennzeichnet, dass** eine Länge der Verbindungsleitungen (501, 502) wenigstens ein Viertel einer Wellenlänge der Resonanzfrequenz der Messsonde (106) beträgt.

10. Füllstandmessgerät (101) gemäß einem der vorhergehenden Ansprüche,
**dadurch gekennzeichnet, dass** eine Resonanzfrequenz der Messsonde (106) wenigstens 10 MHz, bevorzugt wenigstens 50 MHz, weiter bevorzugt wenigstens 100 MHz beträgt.

## Claims

1. Fill level measurement device (101) having control and evaluation electronics (107) having a signal generator (202) for generating an AC voltage, a signal detector (203) for detecting an AC voltage, reflected from an input (205) of a resonant measuring probe (106), from the resonant measuring probe (106) having the input (205), and a connecting element (108) that electrically and mechanically connects the control and evaluation electronics (107) to the measuring probe (106),
**characterized in that**
the connecting element (108) has a first connecting line (501), which connects the signal generator (202) to the input (205) of the measuring probe (106), and a second connecting line (502), which connects the input (205) of the measuring probe (106) to the signal detector (203).

2. Fill level measurement device (101) according to Claim 1,
**characterized in that**
a first impedance of the first connecting line (501) and an input impedance of the output (204) of the signal generator (202) match one another and/or a second impedance of the second connecting line (502) and an input impedance of the input (206) of the signal detector (203) match one another.

3. Fill level measurement device (101) according to Claim 2,
**characterized in that**
the first connecting line (501) and the input impedance of the signal generator (202) match one another such that a reflection factor at the input of the signal generator (202) is minimized, in particular is zero.

4. Fill level measurement device (101) according to Claim 2 or 3,
**characterized in that**
the second connecting line (502) and the input impedance of the signal detector (203) match one another such that a reflection factor at the input of the signal detector (203) is minimized, in particular is zero.

5. Fill level measurement device (101) according to either of Claims 3 and 4,
**characterized in that**
the matching is effected by means of selection of suitable, in particular standardized, connecting lines (501, 502) having a predetermined line impedance of in particular 50 ohms or 75 ohms, and by means of matching of the input impedance of the signal generator (202) and the signal detector (203) by means of impedance matching networks, in particular having an L, T to Pi structure, or line elements, in particular by means of spur lines.

6. Fill level measurement device (101) according to one of the preceding claims,
**characterized in that**
the first connecting line (501) and/or the second connecting line (502) are configured as a coaxial line, a two-wire line or a strip line, in particular as a micro strip line.

7. Fill level measurement device (101) according to one of the preceding claims,
**characterized in that**
the fill level measurement device (101) is configured as a fill level limit switch.

8. Fill level measurement device (101) according to one of the preceding claims,
**characterized in that**
a length of the connecting lines (501, 502) is at least 50 cm, preferably at least 80 cm, more preferably at least 120 cm.

9. Fill level measurement device (101) according to one of the preceding claims,
**characterized in that**
a length of the connecting lines (501, 502) is at least one quarter of a wavelength of the resonant frequency of the measuring probe (106).

10. Fill level measurement device (101) according to one of the preceding claims,
**characterized in that**
a resonant frequency of the measuring probe (106) is at least 10 MHz, preferably at last 50 MHz, more preferably at least 100 MHz.

## Revendications

1. Appareil de mesure de niveau (101) comprenant une électronique de commande et d'exploitation (107) comportant un générateur de signaux (202) permettant d'obtenir une tension alternative, un détecteur de signal (203) permettant de détecter une tension alternative réfléchie à l'entrée (205) d'une sonde de mesure résonante (106) ainsi que la sonde de mesure résonante (106) comportant l'entrée (205) et un élément de liaison (108) qui relie électriquement et mécaniquement l'électronique de commande et d'exploitation (107) avec la sonde de mesure (106),
**caractérisé en ce que**
l'élément de liaison (108) comporte une première conduite de liaison (501) qui relie le générateur de signaux (202) avec l'entrée (205) de la sonde de mesure (106) et une seconde conduite de liaison (502) qui relie l'entrée (205) de la sonde de mesure (106) avec le détecteur de signaux (203).

2. Appareil de mesure de niveau (101) conforme à la revendication 1,
**caractérisé en ce que**
la première impédance de la première conduite de liaison (501) et l'impédance d'entrée de la sortie (204) du générateur de signaux (202) sont adaptées l'une à l'autre, et/ou la seconde impédance de la seconde conduite de liaison (502) et l'impédance d'entrée de l'entrée (206) du détecteur de signaux (203) sont adaptées l'une à l'autre.

3. Appareil de mesure de niveau (101) conforme à la revendication 2,
**caractérisé en ce que**
la première conduite de liaison (501) et l'impédance d'entrée du générateur de signaux (202) sont adaptées l'une à l'autre de sorte que le facteur de réflexion à l'entrée du générateur de signaux (202) soit minimisé et en particulier soit égal à zéro.

4. Appareil de mesure de niveau (101) conforme à la revendication 2 ou 3,
**caractérisé en ce que**
la seconde conduite de liaison (502) et l'impédance d'entrée du détecteur de signaux (203) sont adaptées l'une à l'autre de sorte que le facteur de réflexion à l'entrée du détecteur de signaux (203) soit minimisé et en particulier soit égal à zéro.

5. Appareil de mesure de niveau (101) conforme à l'une des revendications 3 et 4,
**caractérisé en ce que**
l'adaptation est effectuée par le choix de conduites de liaison (501, 502) adaptées en particulier standardisées ayant une impédance prédéfinie, en particulier de 50 Ohm ou de 75 Ohm, ainsi que par adaptation de l'impédance d'entrée du générateur de signaux (202) et du détecteur de signaux (203) par des réseaux d'adaptation d'impédance, ayant en particulier une structure en L, en T ou en Pi ou par des éléments de conduite, en particulier par des conduites en bras de réactance.

6. Appareil de mesure de niveau (101) conforme à l'une des revendications précédentes,
**caractérisé en ce que**
la première conduite de liaison (501) et/ou la seconde conduite de liaison (502) est(sont) réalisée(s) sous la forme de conduites coaxiales, de conduites à deux brins ou de conduites triplaques, en particulier sous la forme de micro conduites triplaques.

7. Appareil de mesure de niveau (101) conforme à l'une des revendications précédentes,
**caractérisé en ce qu'**
il est réalisé sous la forme d'un commutateur à limites de niveau (101).

8. Appareil de mesure de niveau (101) conforme à l'une des revendications précédentes,
**caractérisé en ce que**
la longueur des conduites de liaison (501, 502) est égale à au moins 50 cm, de préférence à au moins 80 cm et de façon plus préférentielle à au moins 120 cm.

9. Appareil de mesure de niveau (101) conforme à l'une des revendications précédentes,
**caractérisé en ce que**
la longueur des conduites de liaison (501, 502) est au moins égale au quart de la longueur d'onde de la fréquence de résonance de la sonde de mesure (106).

10. Appareil de mesure de niveau (101) conforme à l'une des revendications précédentes,
**caractérisé en ce que**
la fréquence de résonance de la sonde de mesure (106) est au moins égale à 10 MHz, de préférence à au moins 50 MHz et de façon plus préférentielle à au moins 100 MHz.
